# EUROPEAN PATENT APPLICATION

(11) **EP 4 696 437 A1**
(43) Date of publication of application: **18.02.2026**
(21) Application number: 24788484.4
(22) Date of filing: 11.03.2024
(51) Int. Cl.: B23B 29/02, B23B 27/10, B23C 9/00, B23Q 11/00, B23Q 11/10

(54) **ANTI-VIBRATION STRUCTURE FOR ROTATING BODY**

(30) Priority: 10.04.2023 JP 2023063488
(71) Applicant: Big Daishowa Seiki Co., Ltd., Higashiosaka-shi, Osaka 579-8013 (JP)
(72) Inventor: OGATA Tatsuya, Higashiosaka-shi, Osaka 579-8013 (JP); KUMASAKI Shunsuke, Higashiosaka-shi, Osaka 579-8013 (JP); UEMURA Shuhei, Higashiosaka-shi, Osaka 579-8013 (JP)
(74) Representative: Winter, Brandl - Partnerschaft mbB
(86) International application number: PCT/JP2024/009239
(87) International publication number: WO 2024/214454

(57) **Abstract**

A vibration-proof structure for a rotating body (2) includes: a cylindrical rotating body (2) having a rotation axis (X) and including: an opening (7a) in an end along the rotation axis (X); and a hollow (7) continuous with the opening (7a) and extending along the rotation axis (X); a weight (12) in the hollow (7); a plurality of elastic members (24, 25) holding the weight (12); and a head member (4) connected to the rotating body (2) in such a manner as to close the opening (7a) and have an axis that coincides with the rotation axis (X), the opening (7a) and the hollow (7) each having a cross section in the shape of a circle with the rotation axis (X) as the center, the weight (12) having a columnar shape and an axis that coincides with the rotation axis (X), the head member (4) including a portion opposite to the rotating body (2) to which portion a cutting tool (5) is attachable, the weight (12) including a protrusion (13) protruding toward the head member (4) from the boundary (B) between the respective outer surface portions (21a, 41a) of the rotating body (2) and the head member (4).

## Description

### Technical Field

The present invention relates to a vibration-proof structure usable for a rotating body to prevent vibration during rotational machining.

### Background Art

Metal machining involves a tool holder that has a tip to which a cutting blade is fixed and that is cantilevered by a machine tool. The tool holder is rotatable to cut metal. Chatter of the tool holder during this cutting work decreases the machining accuracy.

Patent Literature 1 discloses a device for damping vibration of a tool shaft. The device has a weight ("damper" in the document) disposed in a hollow in a rotating body ("rod body" in the document) and configured to vibrate to damp chatter during cutting work by a cutting tool ("cutter head" in the document). The weight absorbs energy of the chatter, so that the device increases the machining accuracy.

### Citation List

### Patent Literature

Patent Literature 1
Japanese Registered Utility Model Publication No. 3212758

### Summary of Invention

### Technical Problem

The device disclosed in Patent Literature 1 is configured such that the cutting tool is apart from the weight along the rotation axis. This may prevent the weight from sufficiently damping chatter during cutting work by the cutting tool if, for instance, the chatter is large.

Under the above circumstances, there has been a demand for a vibration-proof structure usable for a rotating body to effectively damp rotation vibration of the rotating body during cutting work.

### Solution to Problem

A vibration-proof structure according to the present invention for a rotating body characteristically includes: a cylindrical rotating body having a rotation axis and including: an opening in an end along the rotation axis; and a hollow continuous with the opening and extending along the rotation axis; a weight in the hollow; a plurality of elastic members holding the weight; and a head member connected to the rotating body in such a manner as to close the opening and have an axis that coincides with the rotation axis, the opening and the hollow each having a cross section in a shape of a circle with the rotation axis as a center, the weight having a columnar shape and an axis that coincides with the rotation axis, the head member including a portion opposite to the rotating body to which portion a cutting tool is attachable, the weight including a protrusion protruding toward the head member from a boundary between respective outer surface portions of the rotating body and the head member.

The vibration-proof structure configured as above includes a weight disposed in a hollow in the rotating body, held by elastic members, and including a protrusion protruding toward the head member from the boundary between the respective outer surface portions of the rotating body and the head member. Inserting, for instance, the protrusion into the head member places the weight near a cutting tool attached to the head member. This allows the rotating body to effectively damp vibration during cutting work with use of the weight, which is near the cutting tool. Placing the protrusion in the head member means an extended space for containing the weight in the head member, that is, a space for containing the weight which space is larger along the rotation axis. This allows a heavy weight to be placed in the rotating body and the head member to damp vibration effectively.

The vibration-proof structure may be further configured such that the protrusion protrudes toward the head member from the opening, and the plurality of elastic members include at least one elastic member in contact with an outer surface of the protrusion and the head member.

With the above configuration, the protrusion protrudes from the opening of the rotating body toward the head member. This allows the weight to be closer to the cutting tool attached to the head member. This in turn allows the rotating body to effectively damp vibration during the cutting work with use of the weight, which is near the cutting member. The above configuration allows vibration during cutting work to be transmitted from the head member to the weight, not through the rotating body. This allows the weight to start damping vibration early. The elastic members include at least one elastic member in contact with both the outer surface of the protrusion and the head member. This allows the weight to damp vibration during cutting work. The protrusion is held by the elastic member on the head member, so that the weight is held reliably.

The vibration-proof structure may further include: a coolant pipe extending through a center of the weight along the rotation axis through which coolant pipe a coolant flows to be supplied to the cutting tool, wherein the head member has a coolant reservoir continuous with an end of the coolant pipe and having a diameter larger than an inner diameter of the coolant pipe.

With the above configuration, the head member has a coolant reservoir continuous with an end of the coolant pipe and having a diameter larger than the inner diameter of the coolant pipe. This allows the rotating body to supply a coolant through the coolant reservoir to the cutting tool smoothly.

The vibration-proof structure may be further configured such that the head member includes a flow path section extending radially from the coolant reservoir and configured to allow the coolant to flow to be supplied to the cutting tool.

With the above configuration, the head member includes a flow path section extending radially from the coolant reservoir and configured to allow a coolant to flow therethrough to be supplied to the cutting tool smoothly. The flow path section is formed by, for instance, drilling a hole from the outer surface of the head member toward the coolant reservoir. The coolant reservoir is connected to the flow path section and has a diameter larger than the inner diameter of the coolant pipe. This allows the flow path section to be connected to the coolant reservoir easily if the flow path section is formed from the outer surface of the head member, facilitating the formation of the flow path section in the head member.

The vibration-proof structure may be further configured such that the head member includes a plurality of constituent members arranged along the rotation axis of the rotating body, and the protrusion protrudes in at least that constituent member among the plurality of constituent members which is closest to the rotating body.

With the above configuration, the head member includes two or more constituent members. Simply replacing a constituent member of the head member easily changes the function or shape of the head member. The weight includes a protrusion protruding in at least that constituent member which is the closest to the rotating body among the different constituent members. The rotating body thereby allows the weight to be reliably near the cutting tool attached to the head member.

### Brief Description of Drawings

Fig. 1 is a perspective view of a tool holder including a vibration-proof structure as a first embodiment.
Fig. 2 is a vertical cross-sectional view of a tool holder including a vibration-proof structure as a first embodiment.
Fig. 3 is an enlarged view of an encircled area A in Fig. 2.
Fig. 4 is a vertical cross-sectional view of a variation of the first embodiment.
Fig. 5 is a vertical cross-sectional view of a tool holder including a vibration-proof structure as a second embodiment.
Fig. 6 is a vertical cross-sectional view of a tool holder including a vibration-proof structure as an alternative embodiment.

The description below deals in detail with embodiments of the present invention with reference to drawings. The embodiments below are mere examples for describing the present invention. The present invention is not limited to the embodiments, and may be embodied variously without departing from its scope.

### [First Embodiment]

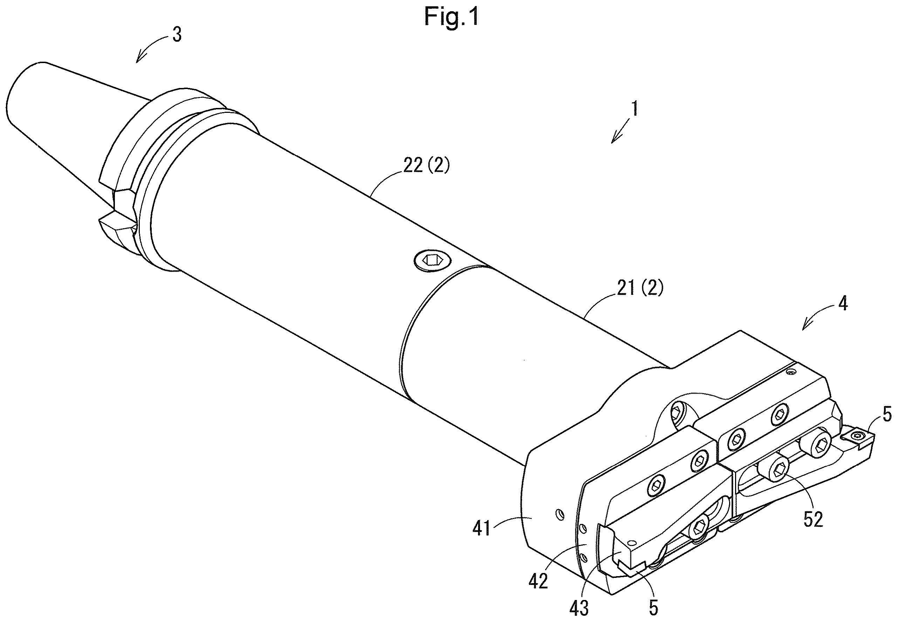

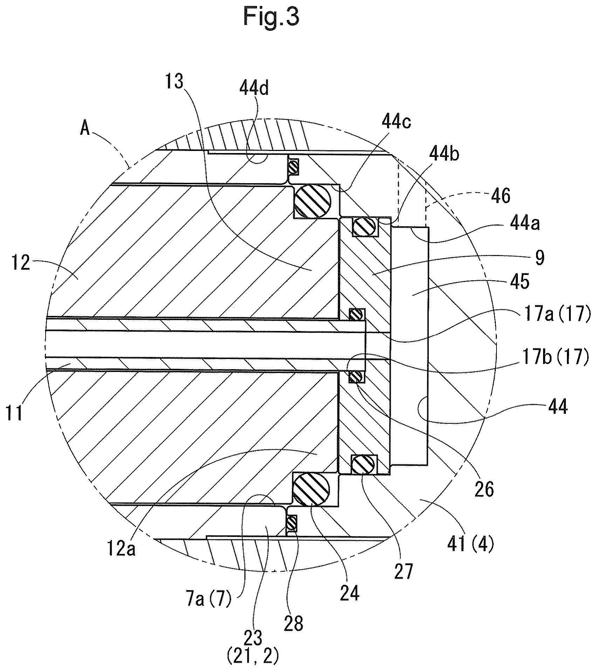

Figs. 1 to 3 each illustrate a tool holder 1 including a vibration-proof structure according to the present invention. The tool holder 1 is for boring use, and includes an elongated, cylindrical body 2 (which is an example rotating body), a tapered shank 3 configured to be held by the spindle of a machine tool (not illustrated in the drawings), and a head member 4 including cutting tools 5. The body 2 for the present embodiment includes a first body section 21 and a second body section 22 continuous with each other along the rotation axis X of the tool holder 1. The first body section 21 is located toward the head member 4, whereas the second body section 22 is located toward the shank 3. The description below uses expressions such as "on the tip side" to refer to something related to the tool holder 1 that is toward the head member 4 in a relative sense and expressions such as "on the base-end side" to refer to something related to the tool holder 1 that is toward the shank 3 in a relative sense. The first body section 21 includes on the tip side a tip section 23 smaller in diameter than the outer surface portion 21a of the first body section 21 and placeable in a depression 44 (see Fig. 3) in a first member 41 described later of the head member 4. The head member 4 includes a portion on the tip side (which is opposite to the first body section 21) to which portion the cutting tools 5 are attachable.

The tool holder 1, which has a rotation axis X, has an opening 7a in an end of the first body section 21 which end is on the tip side along the rotation axis X and a hollow 7 continuous with the opening 7a on the base-end side along the rotation axis X. The hollow 7 is in the form of an axial hole 8 having an opening 7a in the end of the first body section 21 which end is on the tip side. The first body section 21, which has a hollow 7, is in the form of a cylinder.

The opening 7a and the hollow 7 each have a cross section in the shape of a circle with the rotation axis X as its center. The tool holder 1 includes in the hollow 7 a weight 12 made of a material with appropriate damping properties, such as a metal material with a high specific gravity (for example, tungsten). The weight 12 has a columnar shape and an axis that coincides with the rotation axis X. The tool holder 1 includes two or more elastic members 24 and 25 each disposed on an outer surface of the weight 12 and holding the weight 12. The elastic members 24 and 25 for the present embodiment are each in the form of an O ring made of an elastic material.

The tool holder 1 has a coolant supply path 15 extending from the shank 3 to the second body section 22 along an axis that coincides with the rotation axis X and configured to supply a coolant such as cutting oil to the cutting tools 5. The tool holder 1 includes a coolant pipe 11 disposed on the tip side of the coolant supply path 15, connected to the coolant supply path 15, and extending through the hollow 7 along an axis that coincides with the rotation axis X. The coolant pipe 11 extends through the weight 12 and is fitted in the weight 12. The tool holder 1 allows a coolant to flow through the coolant supply path 15 and the coolant pipe 11.

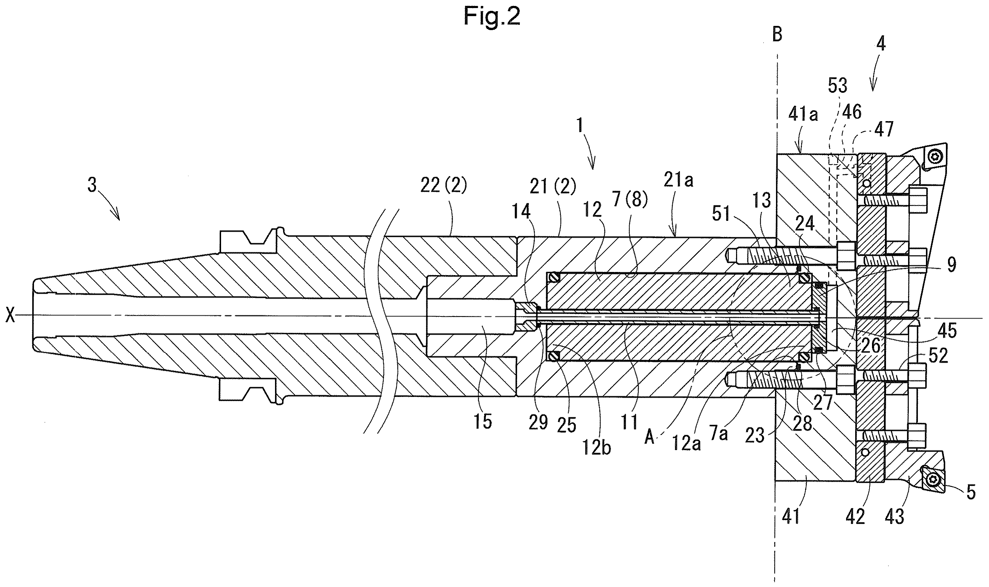

The head member 4 is connected to the tool holder 1 in such a manner as to close the opening 7a and have an axis that coincides with the rotation axis X. As illustrated in Fig. 2, the head member 4 includes a first member 41, a second member 42, and a third member 43 arranged from the base-end side along the rotation axis X. The weight 12 has a portion that protrudes from the opening 7a of the hollow 7. The coolant pipe 11 protrudes from the weight 12 on the tip side. As illustrated in Fig. 3, the first member 41 has a depression 44 in which the weight 12 is inserted. The description below uses the term "protrusion 13" to refer to that portion of the weight 12 which is inserted in the depression 44, that is, which protrudes toward the head member 4 from the boundary B between the outer surface portion 21a of the first body section 21 and the outer surface portion 41a of the first member 41. The head member 4 for the present embodiment includes a first member 41 connected to the first body section 21 in such a manner as to close the opening 7a and have an axis that coincides with the rotation axis X. The third member 43 has a portion on the tip side to which portion the cutting tools 5 are attached. As illustrated in Figs. 1 and 2, the tool holder 1 for the present embodiment includes two cutting tools 5 point-symmetric about the rotation axis X. The tool holder 1 may alternatively include a single cutting tool 5 or three or more cutting tools 5 attached to the head member 4.

As illustrated in Figs. 2 and 3, the depression 44 has an inner diameter that increases in stages from the tip side (that is, toward the cutting tools 5) to the base-end side along the rotation axis X. Fig. 3 is an enlarged view of an area A (which is encircled with a double-dashed chain line) of the tool holder 1 in Fig. 2. As illustrated in Fig. 3, the depression 44 has a first depression section 44a, a second depression section 44b, a third depression section 44c, and a fourth depression section 44d arranged from the tip side to the base-end side in order of increasing inner diameter. The first depression section 44a, together with a plug 9 (described later), defines a coolant reservoir 45. The second depression section 44b contains the plug 9. The third depression section 44c contains the protrusion 13 of the weight 12. The fourth depression section 44d contains the protrusion 13 and the tip section 23 of the first body section 21. The coolant pipe 11 has a portion on the tip side which portion is held by the plug 9.

As illustrated in Fig. 3, the plug 9 has a through hole 17 through which a coolant flows. The coolant pipe 11 is connected to the coolant reservoir 45 through the through hole 17. The through hole 17 includes a first hole section 17a identical in shape to the inner diameter of the coolant pipe 11 and a second hole section 17b identical in shape to the outer shape of the coolant pipe 11. The coolant pipe 11 has (i) a portion on the base-end side which portion is pressed toward the head member 4 by a joint 14 fitted in the coolant supply path 15 in the first body section 21 (see Fig. 2) and (ii) a portion on the tip side which portion is in contact with a step between the first and second hole sections 17a and 17b. This holds the coolant pipe 11 in position. The tool holder 1 includes a sealer 26 fitted in the second hole section 17b inward of its inner surface and in contact with the outer surface of the coolant pipe 11.

Joining the first member 41 of the head member 4 to the first body section 21 holds the coolant pipe 11 and the weight 12 in position. Specifically, first, the weight 12, to which the coolant pipe 11 and the elastic members 24 and 25 are attached, is inserted into the hollow 7 in the first body section 21. Next, the plug 9, to the outer surface of which a sealer 27 is attached, is placed in the second depression section 44b of the first member 41. Then, that portion of the first body section 21 which is on the tip side is fitted into the depression 44 in the first member 41 and adjusted in position. This brings that portion of the coolant pipe 11 which is on the tip side into contact with the step between the first and second hole sections 17a and 17b of the plug 9. The plug 9 is larger in diameter than the first depression section 44a, so that the plug 9 is not in the first depression section 44a. Connecting the first member 41 to the first body section 21 forms a coolant reservoir 45 defined by the first depression section 44a and the plug 9 for temporarily storing a coolant having flown through the coolant supply path 15 and the coolant pipe 11.

As illustrated in Fig. 2, the weight 12 has a base-end-side end 12b toward the shank 3 along the rotation axis X and a tip-side end 12a toward the protrusion 13 along the rotation axis X. The base-end-side end 12b and the tip-side end 12a are smaller in diameter than the other portion of the weight 12. The weight 12 for the present embodiment has a base-end-side end 12b in the hollow 7 and a tip-side end 12a protruding from the opening 7a toward the head member 4 and included in the protrusion 13. The base-end-side end 12b is held by the ring-shaped elastic member 24, which is between the base-end-side end 12b and the hollow 7, whereas the tip-side end 12a is held by the ring-shaped elastic member 25, which is between the tip-side end 12a and the depression 44. At least one of the elastic members 24 and 25 (for the present embodiment, the elastic member 24) is in contact with both the outer surface of the protrusion 13 (that is, of the tip-side end 12a) and the inner surface of the first member 41 (that is, of the head member 4).

The elastic members 24 and 25 are each disposed between the weight 12 and the first member 41 or between the weight 12 and the first body section 21 to apply a predetermined elastic force to the weight 12. The elastic members 24 and 25, which hold the weight 12 in the hollow 7, are not necessarily ring-shaped; they may, for instance, be each divided into two or more sections arranged around the outer surface of the weight 12. Fig. 2 illustrates an example including two elastic members 24 and 25 disposed at the opposite ends of the weight 12 along the rotation axis X and on the outer surface of the weight 12. The tool holder 1 may further include another elastic member disposed at an intermediate portion of the weight 12 and on the outer surface thereof.

As illustrated in Fig. 3, the tool holder 1 includes a sealer 26 between the coolant pipe 11 and the plug 9 and a sealer 27 between the plug 9 and the first member 41. The sealers 26 and 27 each serve to hold different components in position relative to each other and prevent a coolant from entering the area for the weight 12. Preventing such entry of a coolant allows the weight 12 to be displaced for a good vibration-proof effect. The tool holder 1 includes a sealer 28 between an end face of the first body section 21 and the first member 41 to prevent dust or the like from entering the tool holder 1. The tool holder 1 includes a sealer 29 in the first body section 21. The sealer 29 is disposed on the tip side of the joint 14 to hermetically seal the portion of the connection between the joint 14 and the coolant pipe 11 (see Fig. 2).

The first member 41, as illustrated in Fig. 2, includes a flow path section 46 extending radially from the coolant reservoir 45 and configured to allow a coolant to flow to be supplied to the cutting tools 5. The flow path section 46 is formed by, for instance, drilling a hole from the outer surface of the first member 41 toward the coolant reservoir 45. The flow path section 46 has an end closed by a closing element 53 attached thereto from the outer surface of the first member 41. The first member 41 includes a discharge path 47 connected to the flow path section 46 and extending toward the cutting tools 5 through, for example, the first member 41 as well as the second member 42.

The tool holder 1 includes coupling bolts 51 assembling the head member 4 to the body 2. Specifically, the first member 41 is connected to the first body section 21 with use of coupling bolts 51. The second member 42 is connected to the first member 41 with use of couplers (not illustrated in the drawings). The third member 43 is connected to the second member 42 with use of coupling bolts 52. The second member 42 may be, for instance, radially movable relative to the first member 41. The third member 43 may be, for instance, radially movable relative to the second member 42.

Rotating the tool holder 1 with the cutting tools 5 attached allows the cutting tools 5 to cut a workpiece. During the cutting work, the tool holder 1 causes chatter, which is transmitted from the head member 4 through the elastic members 24 and 25 to the weight 12 and is also transmitted to the first body section 21. This causes the weight 12 to vibrate in phase opposite to the first body section 21, meaning that the weight 12 counteracts the chatter radially for vibration-proof of the tool holder 1.

Further, the weight 12 for the present embodiment is in the hollow 7 of the first body section 21 and includes a protrusion 13 protruding toward the head member 4 from the boundary B between the outer surface portion 21a of the first body section 21 and the outer surface portion of the head member 4 (that is, the outer surface portion 41a of the first member 41). Inserting, for instance, the protrusion 13 into the head member 4 together with the tip section 23 of the first body section 21 places a portion of the weight 12 which portion is on the tip side such that the portion is near the cutting tools 5 attached to the head member 4. This allows the body 2 to effectively damp vibration during the cutting work with use of the weight 12, which is near the cutting tools 5. Placing the protrusion 13 in the head member 4 means an extended space for containing the weight 12 in the head member 4, that is, a space for containing the weight 12 which space is larger along the rotation axis X. This allows a heavy weight 12 to be placed in the body 2 and the head member 4 to damp vibration effectively.

The protrusion 13 protrudes from the opening 7a toward the head member 4. This allows the weight 12 to be closer to the cutting tools 5 attached to the head member 4. This in turn allows the body 2 to more effectively damp vibration during the cutting work with use of the weight 12, which is near the cutting tools 5. The above configuration allows vibration during the cutting work to be transmitted from the head member 4 to the weight 12, not through the first body section 21. This allows the weight 12 to start damping vibration early. The elastic members 24 and 25 include an elastic member 24 in contact with both the outer surface of the protrusion 13 (that is, the tip-side end 12a) and the first member 41 (that is, the head member 4). This allows the weight 12 to damp vibration during the cutting work. The protrusion 13 is held by the elastic member 24 on the head member 4, so that the weight 12 is held reliably.

The head member 4 has a coolant reservoir 45 continuous with an end of the coolant pipe 11 and having a diameter larger than the inner diameter of the coolant pipe 11. This allows the tool holder 1 to supply a coolant through the coolant reservoir 45 to the cutting tools 5 smoothly.

The head member 4 for the present embodiment includes a flow path section 46 extending radially from the coolant reservoir 45 and configured to allow a coolant to flow therethrough to be supplied to the cutting tools 5 smoothly. The flow path section 46 is formed by, for instance, drilling a hole from the outer surface of the head member 4 toward the coolant reservoir 45. The coolant reservoir 45 is connected to the flow path section 46 and has a diameter larger than the inner diameter of the coolant pipe 11. This allows the flow path section 46 to be connected to the coolant reservoir 45 easily if the flow path section 46 is formed from the outer surface of the head member 4, facilitating the formation of the flow path section 46 in the head member 4.

The head member 4 for the present embodiment includes two or more constituent members (namely, the first member 41, the second member 42, and the third member 43). Simply replacing a constituent member of the head member 4 easily changes the function or shape of the head member 4. The weight 12 includes a protrusion 13 protruding in at least the first member 41, which is the closest to the first body section 21 among the different constituent members. The first body section 21 (or the tool holder 1) thereby allows the weight 12 to be reliably near the cutting tools 5 attached to the head member 4.

### [Variation of First Embodiment]

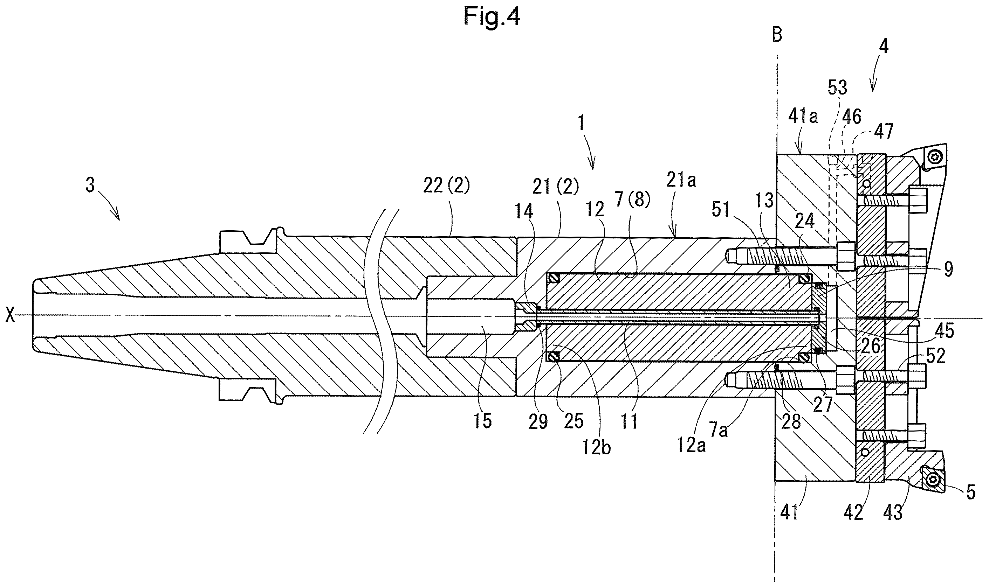

Fig. 4 illustrates a variation including a first body section 21 not fitted in the depression 44 in the first member 41 of the head member 4, so that the protrusion 13 of the weight 12 alone is in the depression 44. The present variation eliminates the need for the first body section 21 to include a tip section 23 and for the depression 44 to include a fourth depression section 44d (see Fig. 3) for containing the tip section 23. This allows the first body section 21 and the depression 44 to each have a simple shape. The present variation, for instance, includes a positioning pin extending from the body 2 (or its first body section 21) to the head member 4 (or its first member 41) for the body 2 and the head member 4 to be coaxial with each other.

### [Second Embodiment]

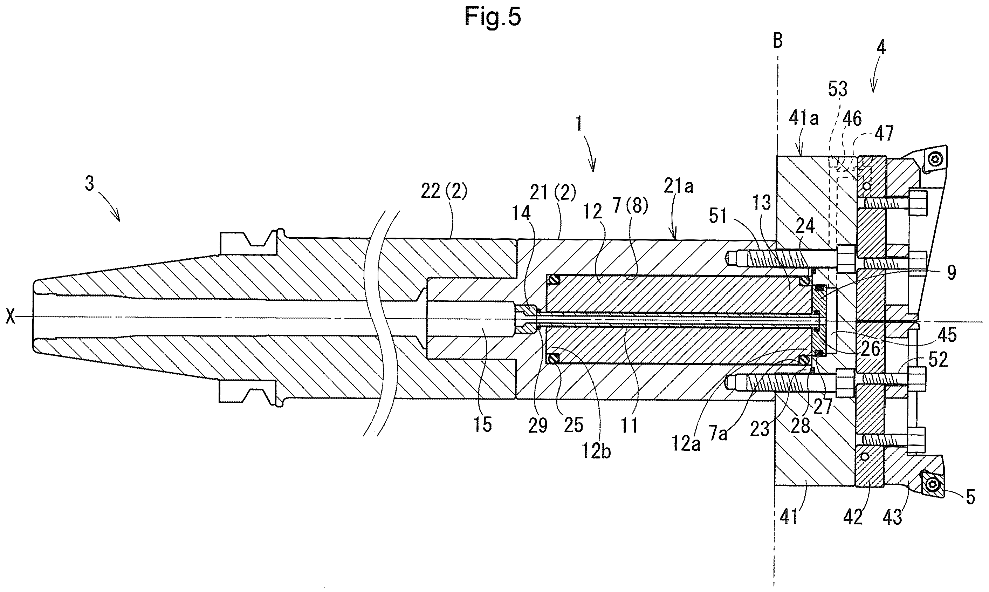

Fig. 5 illustrates a second embodiment including a weight 12 with a protrusion 13 disposed in its entirety in the hollow 7 of the first body section 21, meaning that the protrusion 13 does not protrude from the opening 7a of the hollow 7 toward the head member 4. The weight 12 is held by elastic members 24 and 25 each between the outer surface of the weight 12 and the hollow 7. The present embodiment is otherwise identical in configuration to the first embodiment.

The weight 12 for the present embodiment includes a protrusion 13 protruding toward the head member 4 from the boundary B between the outer surface portion 21a of the first body section 21 and the outer surface portion (21a, 4a) of the head member 4. Inserting the protrusion 13 into the head member 4 together with the tip section 23 of the first body section 21 places the weight 12 near the cutting tools 5 attached to the head member 4. This allows the body 2 to effectively damp vibration during the cutting work with use of the weight 12, which is near the cutting tools 5. During the cutting work, the tool holder 1 as the present embodiment causes chatter, which is transmitted from the head member 4 sequentially to the first body section 21 and the weight 12. This causes the weight 12 to vibrate in phase opposite to the first body section 21.

### [Other Alternative Embodiments]

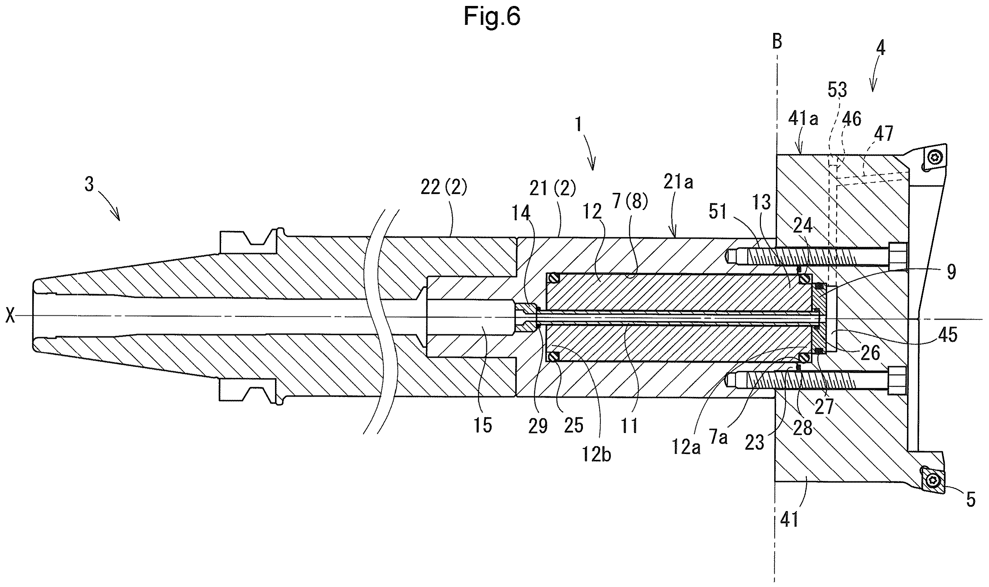

(1) The embodiments described above are each an example including a head member 4 including two or more constituent members. The head member 4 may be in the form of, for example, a single element (that is, the first member 41) to and from which the cutting tools 5 are attachable and detachable, as illustrated in Fig. 6.
(2) The embodiments described above are each an example including a head member 4 having a coolant reservoir 45 continuous with an end of the coolant pipe 11 and having a diameter larger than the inner diameter of the coolant pipe 11. The head member 4 may have, instead of the coolant reservoir 45, a space having a diameter equal to the inner diameter of the coolant pipe 11. The embodiments described above are each an example including a plug 9 on that end face of the weight 12 which is toward the head member 4. The plug 9 may be omitted, in which case the tool holder 1 preferably, for instance, includes a weight 12 with an end face in contact with the inner surface of the head member 4 and a sealer between the coolant pipe 11 and the head member 4.
(3) The first embodiment is an example including an elastic member 24 between the outer surface of the weight 12 and the third depression section 44c in the first member 41 of the head member 4. The elastic member 24 may be between the outer surface of the weight 12 and the hollow 7 of the first body section 21 if, for instance, the hollow 7 coincides with the tip-side end 12a as viewed in the radial direction of the hollow 7.
(4) The embodiments described above are each an example of the vibration-proof structure according to the present invention in the form of a weight 12 around a cylindrical coolant pipe 11. If the tool holder 1 has no need to supply a coolant, the weight 12 may be around a solid, columnar member instead of a cylindrical member. The tool holder 1 may omit the coolant pipe 11 and include a columnar weight 12.

### Industrial Applicability

The present invention is widely applicable to any vibration-proof structure for a rotating body.

### Reference Signs List

- 1: Tool holder
- 2: Body (rotating body)
- 4: Head member
- 5: Cutting tool
- 7: Hollow
- 7a: Opening
- 11: Coolant pipe
- 12: Weight
- 13: Protrusion
- 21: First body section
- 21a: Outer surface portion
- 22: Second body section
- 24, 25: Elastic member
- 41: First member
- 41a: Outer surface portion
- 42: Second member
- 43: Third member
- 44: Depression
- 45: Coolant reservoir
- 46: Flow path section
- B: Boundary
- X: Rotation axis

## Claims

1. A vibration-proof structure for a rotating body, comprising:
a cylindrical rotating body having a rotation axis and including:
an opening in an end along the rotation axis; and
a hollow continuous with the opening and extending along the rotation axis;
a weight in the hollow;
a plurality of elastic members holding the weight; and
a head member connected to the rotating body in such a manner as to close the opening and have an axis that coincides with the rotation axis,
the opening and the hollow each having a cross section in a shape of a circle with the rotation axis as a center,
the weight having a columnar shape and an axis that coincides with the rotation axis,
the head member including a portion opposite to the rotating body to which portion a cutting tool is attachable,
the weight including a protrusion protruding toward the head member from a boundary between respective outer surface portions of the rotating body and the head member.

2. The vibration-proof structure according to claim 1, wherein
the protrusion protrudes toward the head member from the opening, and
the plurality of elastic members include at least one elastic member in contact with an outer surface of the protrusion and the head member.

3. The vibration-proof structure according to claim 1 or 2, further comprising:
a coolant pipe extending through a center of the weight along the rotation axis through which coolant pipe a coolant flows to be supplied to the cutting tool,
wherein the head member has a coolant reservoir continuous with an end of the coolant pipe and having a diameter larger than an inner diameter of the coolant pipe.

4. The vibration-proof structure according to claim 3, wherein
the head member includes a flow path section extending radially from the coolant reservoir and configured to allow the coolant to flow to be supplied to the cutting tool.

5. The vibration-proof structure according to claim 1 or 2, wherein
the head member includes a plurality of constituent members arranged along the rotation axis of the rotating body, and
the protrusion protrudes in at least that constituent member among the plurality of constituent members which is closest to the rotating body.
